# EUROPÄISCHE PATENTANMELDUNG

(11) **EP 2 481 516 A2**
(43) Veröffentlichungstag der Anmeldung: **01.08.2012**
(21) Anmeldenummer: 12151607.4
(22) Anmeldetag: 18.01.2012
(51) Int. Cl.: B23K 15/00, F01D 5/00

(54) **Verfahren zur Herstellung eines Gehäuseteils eines Turbinen-Gehäuses für eine Dampfturbine**

(30) Priorität: 01.02.2011 DE 102011003469
(71) Anmelder: Siemens Aktiengesellschaft, 80333 Munich (DE)
(72) Erfinder: Metz, Mario, 16567 Mühlenbeck (DE)

(57) **Zusammenfassung**

Zur Vereinfachung eines Verfahrens zur Herstellung eines Gehäuseteils (12-1) für ein entlang einer Axialrichtung langgestrecktes Dampfturbinengehäuse (12), bei welchem mehrere solche Gehäuseteile (12-1, 12-2) in Umfangsrichtung des Dampfturbinengehäuses (12) betrachtet aneinandergefügt und miteinander verschraubt sind, wobei das Gehäuseteil (12-1) einen in Axialrichtung und Umfangsrichtung sich erstreckenden Schalenabschnitt (20-1) und an den in Umfangsrichtung betrachteten Enden des Schalenabschnittes (20-1) jeweils einen nach außen abstehenden Flanschabschnitt (22-1) aufweist, der mit einer Reihe von in Axialrichtung voneinander beabstandeten Verschraubungslöchern (24, 26, 28) versehen ist, schlägt die Erfindung vor, zwei separat hergestellte Bauteile (32, 34) in Axialrichtung aneinanderzufügen und entlang eines in Umfangsrichtung verlaufenden Stoßbereiches (36) durch Elektronenstrahlschweißen miteinander zu verschweißen, wobei an hierbei aneinanderzufügenden axialen Enden der beiden Bauteile (32, 34) jeweils eine die Materialstärke des Stoßbereiches (36) wenigstens abschnittsweise reduzierende Aussparung vorgesehen ist und der Stoßbereich (36) in Axialrichtung betrachtet im Bereich eines (26) der Verschraubungslöcher (24, 26, 28) verläuft.

## Beschreibung

Die vorliegende Erfindung betrifft ganz allgemein die Herstellung von Gehäusen für Dampfturbinen, und insbesondere ein Verfahren zur Herstellung eines Gehäuseteils für ein Dampfturbinengehäuse nach dem Oberbegriff des Anspruchs 1.

Eine Dampfturbine kann beispielsweise in einer Kraftwerksanlage oder einer Industrieanlage zum Antrieb eines elektrischen Generators oder einer Arbeitsmaschine (z. B. Kompressor) eingesetzt werden. Hierfür wird die thermische Energie von zugeführtem Dampf mittels eines in einem Dampfturbinengehäuse drehbar gelagerten Turbinenläufers in mechanische Arbeit umgewandelt.

Um den Turbinenläufer, beispielsweise zu Wartungszwecken, in einfacher Weise ein- und ausbauen zu können, wird üblicherweise ein horizontal geteiltes Dampfturbinengehäuse (mit horizontaler Gehäuseteilfuge) vorgesehen. Ein solches Dampfturbinengehäuse ist aus einem unteren Gehäuseteil und einem oberen Gehäuseteil zusammengesetzt, wobei die beiden aneinandergefügten Gehäuseteile miteinander verschraubt sind.

Jedes Gehäuseteil besitzt hierbei einen in Axialrichtung und Umfangsrichtung sich erstreckenden Schalenabschnitt und an den in Umfangsrichtung betrachteten Enden des Schalenabschnittes jeweils einen nach außen abstehenden Flanschabschnitt. Dieser Flanschabschnitt ist mit einer Reihe von in Axialrichtung voneinander beabstandeten Verschraubungslöchern versehen, über denen die genannte Verschraubung erfolgt. Bislang wurden derartige Gehäuseteile bzw. "Halbschalen" eines Turbinengehäuses für den Einsatz bei hohen Temperaturen und Drücken als einstückige Stahlgussbauteile hergestellt. Insbesondere für größere Turbinengehäuse, z. B. mit einer Länge von mehr als 5 m und einem (maximalen) Durchmesser von mehr als 2 m, sind die nach dem Stand der Technik hergestellten Gehäuseteile extrem teuer. Weiterhin wächst mit der Größe der Gehäuseteile die Gefahr notwendiger Reparaturschweißungen bei der Herstellung (Spannungsrisse, Fehlstellen). Außerdem ergeben sich beträchtliche Probleme bzw. Kosten im Zusammenhang mit dem Transport derartig großer Gehäuseteile.

Es ist eine Aufgabe der vorliegenden Erfindung, die vorstehend erwähnten Probleme zu beseitigen und die Ausbildung eines Dampfturbinengehäuses zu vereinfachen.

Diese Aufgabe wird gemäß der Erfindung bei einem Verfahren der eingangs genannten Art zur Herstellung eines Gehäuseteils dadurch gelöst, dass zwei separat hergestellte Bauteile in Axialrichtung aneinandergefügt und entlang eines in Umfangsrichtung verlaufenden Stoßbereiches durch Elektronenstrahlschweißen miteinander verschweißt werden, wobei an hierbei aneinanderzufügenden axialen Enden der beiden Bauteile jeweils eine die Materialstärke des Stoßbereiches reduzierende Aussparung vorgesehen ist und der Stoßbereich in Axialrichtung betrachtet im Bereich eines der Verschraubungslöcher verläuft.

Die Grundidee dieser Lösung besteht darin, die mit der Größe eines Gehäuseteils überproportional steigenden Kosten im Zusammenhang mit Herstellung und Transport bzw. Logistik dadurch zu verringern, dass das Gehäuseteil aus (wenigstens) zwei zunächst separat hergestellten und sodann nachträglich miteinander verschweißten Bauteilen hergestellt wird.

Wenngleich die Grundidee der Erfindung auf den ersten Blick "simpel" erscheinen mag, so ist zu bedenken, dass eine praxistaugliche Umsetzung dieser Idee bislang insbesondere bereits deshalb scheiterte, weil Gehäuseteile der hier in Rede stehenden Art mit einer typischen Materialstärke (Dicke) in einem Bereich von z. B. 50 bis 150 mm zu dick für eine praxistaugliche Verschweißung gemäß einer herkömmlichen Methode sind.

Prinzipiell denkbar wäre zwar eine Verschweißung durch so genanntes "Elektronenstrahlschweißen", wobei jedoch zu bedenken ist, dass erstens auch hierbei eine gewisse Begrenzung für die schweißbare Materialstärke besteht und zweitens in der Praxis in Umfangsrichtung (entlang des zu verschweißenden Bereiches) zumeist eine stark variierende Materialstärke vorliegt, welche einer guten und gleichmäßigen Qualität der Verschweißung über deren gesamte Länge entgegensteht. Insbesondere ist die Materialstärke im Bereich der Flanschabschnitte des Gehäuseteils zumeist sehr viel größer als im Schalenabschnitt des Gehäuseteils. Somit können insbesondere die Flanschabschnitte der aneinandergefügten und miteinander zu verbindenden Bauteile viel zu dick für eine Elektronenstrahlverschweißung sein.

Zur Überwindung dieses Problems sieht die Erfindung vor, die aneinandergefügten Bauteile entlang des Stoßbereiches durch Elektronenstrahlschweißen miteinander zu verschweißen, so dass vorteilhaft ein "Durchschweißen" des Stoßbereiches realisiert wird, wobei des Weiteren wesentlich ist, dass hierbei an den aneinanderzufügenden axialen Enden der beiden Bauteilen jeweils eine Materialaussparung vorgesehen ist, welche die Materialstärke des Stoßbereiches reduziert. Diese Reduzierung der Materialstärke muss sich erfindungsgemäß nicht zwingend über die gesamte Länge des Stoßbereiches (in Umfangsrichtung) erstrecken. Wesentlich ist vielmehr, dass durch diese Reduzierung eine mehr oder weniger gleichmäßige Materialstärke entlang des Stoßbereiches geschaffen wird, und zwar selbst dann, wenn das "Design" der aneinanderzufügenden Bauteile als solches eine in Umfangsrichtung stark variierende Materialstärke vorsieht, insbesondere z. B. stark verdickte Flanschabschnitte. Durch diese wenigstens abschnittsweise reduzierte Materialstärke des Stoßbereiches ist es vorteilhaft möglich, extrem dickwandige Gehäuseteile herzustellen, insbesondere mit gleichmäßiger Materialstärke (oder kontrolliert veränderlicher Materialstärke) über den zu verschweißenden Bereich. Schließlich ist gemäß der Erfindung wesentlich, dass der Stoßbereich in Axialrichtung betrachtet im Bereich eines der Verschraubungslöcher am Flanschabschnitt des Gehäuseteils verläuft. Es hat sich überraschenderweise herausgestellt, dass dieser Verlauf des Stoßbereiches erheblich verringerte maximale Spannungen bzw. Pressungen im Volumen des fertiggestellten Gehäuseteils ergibt, wenn das Gehäuseteil den Temperatur- und Druckbelastungen im späteren Turbinenbetrieb ausgesetzt ist.

Die zur Herstellung des Gehäuseteils verwendeten Bauteile können aufgrund ihrer relativ kleinen Abmessungen (im Vergleich zu den Abmessungen des daraus hergestellten Gehäuseteils) sehr kostengünstig hergestellt, gelagert und transportiert werden. Etwaiger Ausschuss bei der Produktion dieser Bauteile kann vorteilhaft bereits aussortiert werden noch bevor diese Teile zur Herstellung des Gehäuseteils verwendet werden.

Als Material für die Bauteile eignen sich prinzipiell alle verschweißbaren, insbesondere metallischen Werkstoffe.

Die beiden zu verschweißenden Bauteile können aus dem gleichen Material oder aus zwei voneinander verschiedenen Materialien hergestellt sein.

In einer bevorzugten Ausführungsform sind die Bauteile jeweils als Gussteil, insbesondere Stahlgussteil vorgesehen.

Das Gehäuseteil besitzt den beispielsweise im Wesentlichen einachsig gekrümmten Schalenabschnitt, der sich in Umfangsrichtung über einen Winkelbereich von z. B. 180° zur Ausbildung einer "Halbschale" erstrecken kann. Ein dieser Formgestaltung zuordenbarer "Durchmesser" wird über die axiale Länge des Schalenabschnittes zumeist variieren (entsprechend des abhängig von der axialen Position in Radialrichtung vom Inventar der betreffenden Dampfturbine benötigten Bauraumes). Dementsprechend kann das Dampfturbinengehäuse insbesondere teilweise aus zylindrischen und teilweise aus konischen Abschnitten gebildet sein.

In einer Ausführungsform ist vorgesehen, dass das Gehäuseteil genau zwei Bauteile umfasst, die in der erfindungsgemäßen Weise miteinander verschweißt wurden. Bei einer axialen Länge des Gehäuseteils von z. B. 6 m können beispielsweise zwei Bauteile mit einer axialen Länge von jeweils etwa 3 m verwendet werden. In diesem Beispiel liegt die entsprechende Teilungsebene also in der axialen Mitte der Gesamtlänge des Gehäuseteils bzw. des damit aufgebauten Turbinengehäuses. Ganz allgemein ist bei einer zweiteiligen Ausführung des Gehäuseteils eine Teilungsebene bevorzugt, die im Bereich von 30% bis 70%, insbesondere 40% bis 60%, der axialen Gesamtlänge des Gehäuseteils liegt.

Insbesondere für noch längere Dampfturbinengehäuse kann auch vorgesehen sein, das Gehäuseteil aus mehr als zwei Bauteilen der genannten Art herzustellen (also z. B. 3 oder 4 Bauteilen), die paarweise in erfindungsgemäßer Weise verschweißt werden. So kann z. B. ein Gehäuseteil einer Länge von 12 m beispielsweise aus drei Bauteilen einer Länge von jeweils 4 m hergestellt werden, die entlang zweier Teilungsebenen verschweißt werden.

Jedes der erfindungsgemäß für die ElektronenstrahlVerschweißung herangezogenen Bauteile besitzt zumindest den "Schalenabschnitt", der sich in Axialrichtung und in Umfangsrichtung erstreckt, sowie die zwei "Flanschabschnitte" an den beiden in Umfangsrichtung betrachteten Enden des Schalenabschnittes. Falls ein Bauteil in der Verwendungssituation (am fertigen Dampfturbinengehäuse) einen axialen Endbereich des Turbinengehäuses ausbildet, so besitzt dieses Bauteil bevorzugt auch noch einstückig angebunden einen "Stirnwandabschnitt" des Turbinengehäuses.

In einer Ausführungsform ist vorgesehen, dass das Gehäuseteil mit einer axialen Länge von mehr als 1 m, insbesondere mehr als 2 m, hergestellt wird.

Der Schalenabschnitt des Gehäuseteils (bzw. jeder entsprechende Schalenabschnitt der Bauteile, aus denen das Gehäuseteil gebildet wird) besitzt bevorzugt eine minimale Materialstärke (Dicke) von mehr als 50 mm oder mehr als 75 mm oder mehr als 100 mm.

Diese Dimensionierung der Materialstärke des Schalenabschnittes bezieht sich nicht auf den in Umfangsrichtung sich erstreckenden Abschnitt des Stoßbereiches. Dieser ist erfindungsgemäß dadurch reduziert, dass an den aneinanderzufügenden axialen Enden der Bauteile jeweils eine die Materialstärke reduzierende Aussparung vorgesehen ist. An dieser Stelle (im Stoßbereich) ist die Materialstärke somit etwas geringer als an den vom Stoßbereich entfernt liegenden Abschnitten des Gehäuseteils. Falls die Materialstärke des Schalenabschnittes von ihrer Größe her für das Elektronenstrahlverschweißen geeignet ist, so kann die Verringerung der Materialstärke hier dennoch vorteilhaft vorgesehen werden, um z. B. Gußtoleranzen auszugleichen und somit eine Vergleichmäßigung der Materialstärke über den Umfang des Schalenabschnittes zu erzielen. Falls die Materialstärke des Schalenabschnittes jedoch zu groß für ein zuverlässiges Elektronenstrahlverschweißen ist und/oder die Flanschabschnitte zu dick für eine solche Verschweißung sind, so kann die Verringerung der Materialstärke in den betreffenden Bereichen auch größere Ausmaße annehmen (z. B. wenigstens 10 mm oder wenigstens 20 mm).

Die vorstehend erwähnte Dimensionierung der Materialstärke des Schalenabschnittes wird in der Praxis abgesehen vom verwendeten Material dadurch bedingt, dass das Gehäuseteil in der späteren Verwendungssituation den zu erwartenden Drücken (bei den zu erwartenden Temperaturen) standhalten muss. So kann sich z. B. für einen konkreten Anwendungsfall durchaus eine Materialstärke des Schalenabschnittes von etwa 150 mm ergeben.

Die Materialstärke des Stoßbereiches ist so zu dimensionieren, dass das eingesetzte Elektronenstrahlschweißverfahren eine einwandfreie Verschweißung im Stoßbereich sicherstellt. Dies ist in der Praxis z. B. dann der Fall, wenn der entlang des Stoßbereiches geführte Elektronenstrahl ein lokales Aufschmelzen des Materials über die gesamte Materialstärke bewirkt, also ein "Durchschweißen" erfolgt. Abhängig vom verwendeten Elektronenschweißgerät und abhängig vom zu verschweißenden Material kann daher die Materialstärke des Stoßbereiches in der Praxis z. B. auf einen Wert von maximal etwa 100 bis 150 mm begrenzt sein.

In einer Ausführungsform ist vorgesehen, dass die Materialstärke im Stoßbereich kleiner als 150 mm ist.

Besonders bevorzugt werden die Bauteile in Axialrichtung "stumpf gestoßen" aneinander gefügt und sodann verschweißt, wobei bevorzugt eine (über die Materialstärke) vollständige Durchschweißung vorgesehen ist.

Bevorzugt erfolgt die Verschweißung ohne Zugabe eines Schweißzusatzwerkstoffes.

Die Aussparung am axialen Ende des Bauteils, welche die gewünschte Reduzierung der Materialstärke des Stoßbereiches bewirkt, ist bevorzugt an der (in Radialrichtung betrachteten) Außenseite des Bauteils vorgesehen. Alternativ oder zusätzlich kann das Bauteil jedoch auch an der Innenseite ausgespart werden, um die gewünschte Reduzierung der Materialstärke im Stoßbereich zu bewirken.

In einer Ausführungsform stellt die Aussparung am axialen Ende des Bauteils eine Stufe dar, welche einen Außendurchmesser im Stoßbereich reduziert bzw. einen Innendurchmesser im Stoßbereich vergrößert. Wenn die beiden miteinander zu verschweißenden Bauteile jeweils auf der gleichen Seite (Innenseite oder Außenseite) ausgespart bzw. abgestuft werden, so ergibt sich im aneinandergefügten Zustand eine entsprechende Umfangsnut, an welcher beim Verschweißen der Elektronenstrahl, je nach Strahlrichtung, eintritt oder austritt. Eine solche Nut besitzt bevorzugt eine Breite (in Axialrichtung) im Bereich von 2 bis 10 mm. Der verwendete Elektronenstrahl sollte dementsprechend auf einen Strahldurchmesser fokussiert sein, der etwas kleiner als die Nutbreite ist.

In einer Ausführungsform ist vorgesehen, dass das Elektronenstrahlschweißen entlang des Stoßbereiches mit einem von innen nach außen gerichteten Elektronenstrahl erfolgt. Alternativ könnte der Elektronenstrahl jedoch auch von außen nach innen gerichtet sein.

Der Flanschabschnitt des Bauteils, der an den beiden in Umfangsrichtung betrachteten Enden des Schalenabschnittes nach außen absteht, kann insbesondere mehr oder weniger exakt in Radialrichtung bzw. in dieser Radialrichtung sich erstreckende Flanschflächen (zur Anlage an korrespondierenden Radialflanschflächen eines in Verwendungssituation daran angrenzenden anderen Gehäuseteils) aufweisen.

Die Materialstärke (Dicke) des Flanschabschnittes ist bevorzugt größer als die Materialstärke im Bereich des Schalenabschnittes. Bevorzugt steigt die Materialstärke in einem Übergangsbereich vom Schalenabschnitt zum Flanschabschnitt kontinuierlich an.

Die entlang des Flanschabschnittes in Axialrichtung voneinander beabstandet angeordneten Verschraubungslöcher sind bevorzugt mit einem gegenseitigen Abstand (von Lochmitte zu Lochmitte) angeordnet, der kleiner als das 2-fache des Durchmessers der Verschraubungslöcher ist.

Der Durchmesser der Verschraubungslöcher kann z. B. größer als 50 mm, insbesondere größer als 75 mm, sein. Die Längsachse der Verschraubungslöcher kann z. B. jeweils in Tangentialrichtung verlaufen.

Jedes Verschraubungsloch kann prinzipiell mit oder ohne Innengewinde ausgebildet werden (da für die Verschraubung auch Schraubenmuttern eingesetzt werden können). Dasjenige Verschraubungsloch, in dessen Bereich der Stoßbereich der Elektronenstrahlverschweißung verläuft, wird bevorzugt als Durchgangsloch, d. h. ohne Innengewinde ausgebildet.

Die Verschraubungslöcher können vor oder nach der Elektronenstrahlverschweißung ausgebildet werden.

Bevorzugt ist jedoch vorgesehen, dass zumindest dasjenige Verschraubungsloch, in dessen Bereich der Stoßbereich verläuft, erst nach dem Verschweißen der beiden Bauteile ausgebildet oder durch eine Nachbearbeitung auf Fertigmaß gebracht wird.

Eine solche Nachbearbeitung dieses Verschraubungsloches kann z. B. dadurch erfolgen, dass ein bereits vor der Verschweißung mit noch zu klein bemessenem Durchmesser ausgebildetes Loch nach der Verschweißung entsprechend aufgebohrt wird.

Gemäß eines weiteren Aspekts der vorliegenden Erfindung ist ein Verfahren zur Herstellung eines Dampfturbinengehäuses durch Aneinanderfügen und miteinander Verschrauben mehrerer Gehäuseteile vorgesehen, welches dadurch gekennzeichnet ist, dass wenigstens eines der Gehäuseteile mittels eines Verfahrens der oben beschriebenen Art hergestellt wird bzw. hergestellt wurde.

Die Erfindung wird nachfolgend anhand von Ausführungsbeispielen mit Bezug auf die beigefügten Zeichnungen weiter beschrieben. Es stellen dar:
- Fig. 1: einen schematischen Axiallängsschnitt einer Dampfturbine mit einem aus zwei Gehäuseteilen gebildeten Turbinengehäuse,
- Fig. 2: einen Radialschnitt längs der Linie II-II in Fig. 1, und
- Fig. 3: eine perspektivische Teilansicht eines oberen Gehäuseteils im Bereich einer Schweißverbindung zwischen zwei Bauteilen, welche dieses Gehäuseteil ausbilden.

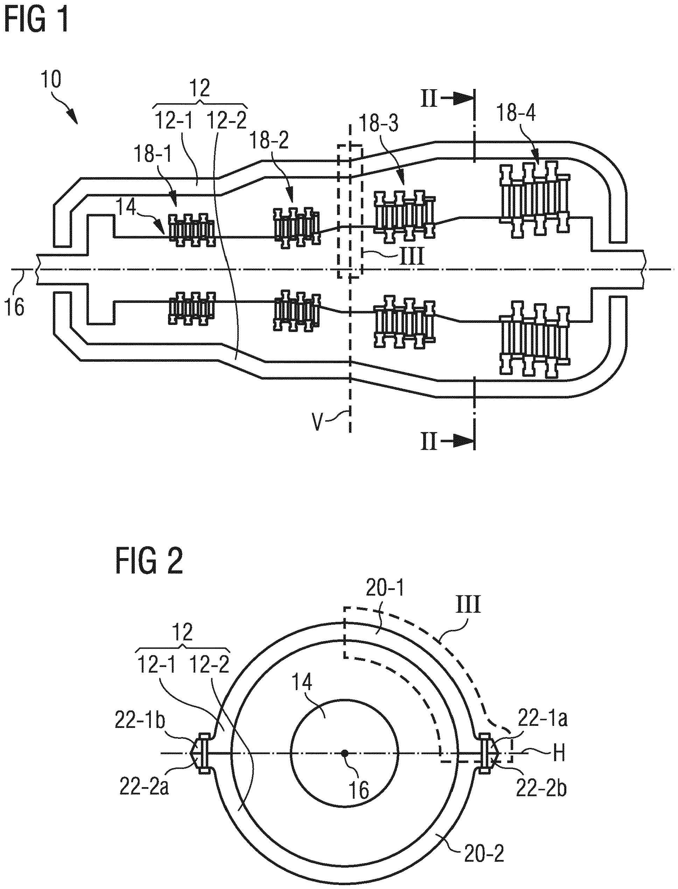

Fig. 1 veranschaulicht den Aufbau einer Dampfturbine 10 zur Verwendung in einer Kraftwerks- oder Industrieanlage, um Energie von zugeführtem Wasserdampf mittels eines in einem Dampfturbinengehäuse 12 drehbar gelagerten Turbinenläufers 14 in mechanische Arbeit umzuwandeln. Der um eine Turbinenachse 16 drehbar gelagerte Turbinenläufer 14 kann z. B. mit einem (nicht dargestellten) elektrischen Generator verbunden sein.

Entlang der Turbinenachse 16 sind mehrere von Wasserdampf durchströmbare Stufengruppen 18-1, 18-2, 18-3 und 18-4 vorgesehen, die im dargestellten Ausführungsbeispiel in der Figur nacheinander von links nach rechts durchströmt werden.

An einem (nicht dargestellten) Frischdampfeinlass wird Frischdampf mit hohem Druck und hoher Temperatur in die Turbine 10 eingeleitet und nach der Durchströmung der Stufengruppen 18-1 bis 18-4 mit niedrigem Druck und niedriger Temperatur über einen (nicht dargestellten) Dampfauslass wieder aus der Turbine 10 herausgeführt.

Jede der Stufengruppen 18-1 bis 18-4 ist aus einer drehfest mit dem Turbinenläufer 14 verbundenen Laufschaufelstruktur und einer damit zusammenwirkenden und stationär zum Turbinengehäuse 10 gehaltenen Leitschaufelstruktur gebildet. Üblicherweise besteht eine Laufschaufelstruktur hierbei aus einer Reihe von axial voneinander beabstandeten Laufschaufelkränzen mit radial von dem Turbinenläufer 14 abstehenden Laufschaufeln, und besteht eine Leitschaufelstruktur aus einer Reihe von axial voneinander beabstandeten Leitschaufelkränzen mit mehreren radial von stationären Leitschaufelträgern nach innen ragenden Leitschaufeln, so dass im Dampfströmungsverlauf einer Stufengruppe abwechselnd Laufschaufeln und Leitschaufeln von Wasserdampf umströmt werden.

In den nacheinander von Wasserdampf durchströmten Stufengruppen 18-1 bis 18-4 erfolgt jeweils eine druck- und temperaturreduzierende Expansion des Wasserdampfes.

Um den Turbinenläufer 14 zu Wartungszwecken in einfacher Weise ein- und ausbauen zu können, ist das Turbinengehäuse 12 horizontal geteilt ausgebildet. Es umfasst ein erstes Gehäuseteil 12-1 ("obere Gehäusehalbschale") und ein zweites Gehäuseteil 12-2 ("untere Gehäusehalbschale").

Wie aus der Ansicht von Fig. 2 ersichtlich, sind bei dem Turbinengehäuse 12 die beiden Gehäuseteile 12-1 und 12-2 in Umfangsrichtung betrachtet aneinandergefügt und miteinander verschraubt.

Jedes der Gehäuseteile 12-1 und 12-2 weist hierzu einen in Axialrichtung und Umfangsrichtung sich erstreckenden Schalenabschnitt 20-1 bzw. 20-2 und an den in Umfangsrichtung betrachteten Enden davon jeweils einen nach außen abstehenden Flanschabschnitt 22-1a und 22-1b bzw. 22-2a und 22-2b. Diese im dargestellten Ausführungsbeispiel insgesamt vier Flanschabschnitte sind jeweils mit einer Reihe von in Axialrichtung voneinander beabstandeten Verschraubungslöchern versehen.

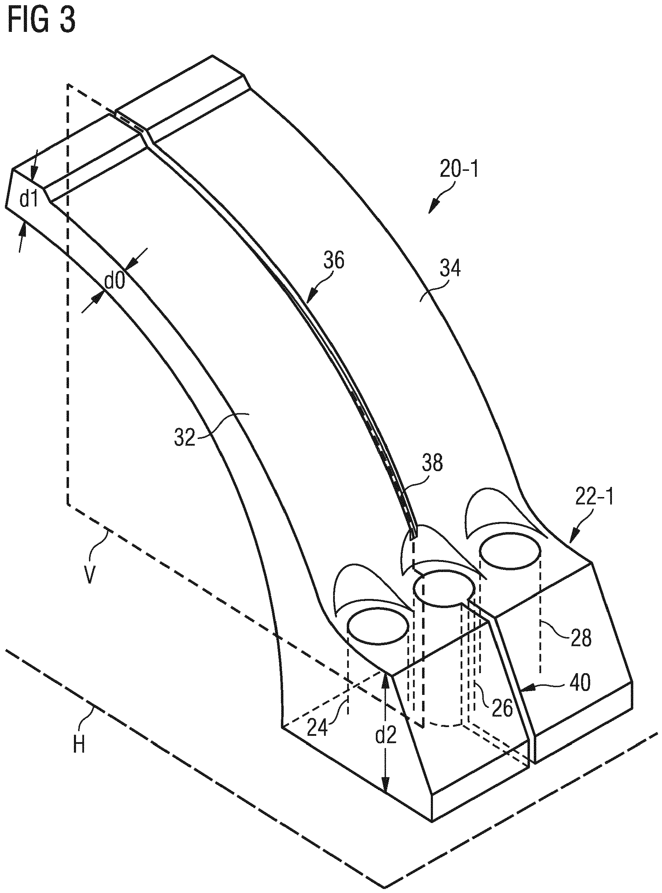

Fig. 3 zeigt in einer perspektivischen Ansicht ein Detail des Gehäuseteils 20-1. Die in Axialrichtung und in Umfangsrichtung betrachtete Lage des in Fig. 3 dargestellten Details ist in den Fig. 1 und 2 durch gestrichelt umrandete Bereiche III gekennzeichnet. Demgemäß ist in Fig. 3 lediglich ein in Axialrichtung relativ kurzer Abschnitt des Gehäuseteils 12-1 dargestellt, in welchem drei Verschraubungslöcher 24, 26 und 28 am Flanschabschnitt 22-1 ersichtlich sind. Zudem ist die Darstellung in Fig. 3 oben an der oberen Scheitellinie des Gehäuseteils 12-1 abgebrochen. In Umfangsrichtung betrachtet ist in Fig. 3 somit lediglich ein 90°-Abschnitt des Gehäuseteils 12-1 dargestellt, welches sich insgesamt über 180° erstreckt (vgl. Fig. 2).

Eine Besonderheit des Turbinengehäuses 12 besteht darin, dass wenigstens eines der in Umfangsrichtung hierfür aneinandergefügten Gehäuseteile, hier also wenigstens eines der entlang der Horizontalebene H aneinandergefügten Gehäusehälften bzw. Gehäuseteile 12-1 und 12-2 nicht einstückig aus Stahl gegossen sondern aus wenigstens zwei zunächst separat vorgefertigten Bauteilen zusammengesetzt ist. Dementsprechend wurde zur Herstellung des oder der betreffenden Gehäuseteile ein besonderes Herstellungsverfahren verwendet.

Diese Besonderheit wird nachfolgend für den Aufbau bzw. die Herstellung des Gehäuseteils 12-1 mit Bezug auf die Fig. 3 detaillierter erläutert. Das im dargestellten Ausführungsbeispiel noch vorhandene zweite Gehäuseteil 12-2 kann in analoger Weise ausgebildet bzw. hergestellt sein.

Bei der Herstellung des Gehäuseteils 12-1 werden zwei separat hergestellte Baueile 32 und 34 (z. B. jeweils Stahlgussteile) in Axialrichtung aneinandergefügt und entlang eines in Umfangsrichtung verlaufenden Stoßbereiches 36 durch Elektronenstrahlschweißen miteinander verschweißt. An hierbei aneinanderzufügenden axialen Enden der beiden Bauteile 32 und 34 ist jeweils eine die Materialstärke des Stoßbereiches 36 reduzierende Aussparung vorgesehen.

Im dargestellten Beispiel stellen die Aussparungen an den axialen Enden der Bauteile 32 und 34 jeweils eine Stufe an der (in Radialrichtung betrachteten) Außenseite des jeweiligen Bauteils 32 bzw. 34 dar, so dass sich im Stoßbereich 36 ein reduzierter Außendurchmesser ergibt. In Fig. 3 ist im Stoßbereich 36 der aneinandergefügten Bauteile 32 und 34 dementsprechend eine Umfangsnut zu erkennen. In Fig. 3 ist ein Nutengrund mit 38 gekennzeichnet. In Fig. 3 ist ferner eine Radialebene bzw. Vertikalebene V eingezeichnet, an welcher die axialen Enden der Bauteile 32 und 34 aneinanderstoßen. Nachdem die Bauteile 32 und 34 wie in Fig. 3 dargestellt in Position gebracht wurden, erfolgt ein miteinander Verschweißen der Bauteile 32 und 34 entlang des in Umfangsrichtung verlaufenden Stoßbereiches 36 durch einen Elektronenstrahlschweißen, so dass die beiden Bauteile 32 und 34 dauerhaft miteinander verbunden werden.

Wie aus Fig. 3 ersichtlich, besitzt der Flanschabschnitt 22-1 eine wesentlich (um ein Vielfaches) größere Materialstärke als der Schalenabschnitt 20-1. Mit einer solchen Materialstärke würde eine einwandfreie Elektronenstrahlverschweißung des Flanschabschnittes 22-1 scheitern. Daher ist die erfindungsgemäß vorgesehene Reduzierung der Materialstärke des Stoßbereiches 36 im Bereich des Flanschabschnittes 22-1 sehr viel größer als im Schalenabschnitt 20-1 vorgesehen. Am Flanschabschnitt 22-1 sind die Materialstärken der aneinandergefügten Bauteile so weit reduziert, dass damit ein "Entlastungsschlitz" 40 ausgebildet wird. Damit ergibt sich eine gleichbleibende Wandstärke des Stoßbereiches 36 über die gesamte Länge in Umfangsrichtung.

Dadurch, dass das Gehäuseteil 12-1 aus (wenigstens) zwei zunächst separat hergestellten und sodann nachträglich miteinander verschweißten Bauteilen (hier: Bauteile 32 und 34) hergestellt wird, ergeben sich beträchtlich reduzierte Kosten im Zusammenhang mit dieser Herstellung sowie dem Transport bzw. der Logistik der beiden Bauteile für das Gehäuseteil 12-1. Im Stand der Technik wurden derartige Gehäuseteile beispielsweise einteilig aus Stahl gegossen. Durch die beschriebene Vorgehensweise ergibt sich auch eine verringerte Gefahr für einen Verzug der zusammengefügten Bauteile 32, 34 bei deren Verschweißung. Schließlich besteht auch vorteilhaft die Möglichkeit der Wahl von diversen Materialkombinationen für die zusammengefügten und miteinander verschweißten Bauteile, etwa entsprechend unterschiedlicher Anforderungen hinsichtlich der Druck- und Temperaturbelastungen in der späteren Verwendungssituation.

Eine Materialstärke (Dicke) d0 des Schalenabschnittes 20-1 des Bauteils 12-1 (und dementsprechend die Materialstärken der Schalenabschnitte der Bauteile 32 und 34) beträgt 80 mm, wobei jedoch im Scheitelbereich eine erhöhte Materialstärke d1 von 90 mm vorgesehen ist, um im Einsatz des Gehäuseteils 12-1 eine entsprechende Aussteifung des damit gebildeten Turbinengehäuses 12 zu bewirken. Eine noch größere Materialstärke d2 ist am Flanschabschnitt 22-1 des Gehäuseteils 12-1 (bzw. den entsprechenden Flanschabschnitten der Bauteile 32 und 34) vorgesehen. Die Materialstärke d2 beträgt in diesem Beispiel etwa 230 mm. Wie aus der Figur ersichtlich, steigt die Materialstärke in einem Übergangsbereich vom Schalenabschnitt 20-1 zum Flanschabschnitt 22-1 kontinuierlich an (von d0 auf d2).

Entlang des Stoßbereiches 36 bzw. der Vertikalebene V beträgt die Materialstärke im dargestellten Beispiel jedoch lediglich etwa 70 mm. Die Reduktion der Materialstärke im Stoßbereich 36 ist durch die erwähnten Aussparungen am Außenumfang der axial aneinanderstoßenden Enden der Bauteile 32 und 34 bewirkt. Die Reduktion der Materialstärke ist im dargestellten Beispiel besonders ausgeprägt im Bereich des Flanschabschnittes 22-1 (Entlastungsschlitz 40). Vorteilhaft ergibt sich über den gesamten Umfang des Stoßbereiches 36 eine wohldefinierte und gleichmäßige Materialstärke, so dass das Elektronenstrahlschweißen fehlerfrei ausgeführt werden kann.

Im dargestellten Ausführungsbeispiel ist diese Materialstärke von z. B. 70 mm (oder auch mehr) im Stoßbereich 36 an das zum Verbinden der Bauteile 32 und 34 eingesetzte Elektronenstrahlschweißverfahren angepasst. Bei diesem Verfahren erfolgt das Elektronenstrahlschweißen entlang des Stoßbereiches 36 mit einem (radial) von innen nach außen gerichteten Elektronenstrahl, welcher zu einem vollständigen Aufschmelzen des den Stoßbereich 36 bildenden Stahlmaterials über die gesamte Materialstärke von 70 mm bewirkt. Vorteilhaft wird also ein "Durchschweißen" des Stoßbereiches 36 realisiert. Der Elektronenstrahl wird hierbei in Umfangsrichtung über den "180°-Bogen" in der Vertikalebene V geführt, wodurch die stumpf gestoßenen axialen Enden der Bauteile 32 und 34 zuverlässig miteinander verschweißt werden.

Die hierfür auf ein definiertes Maß (z. B. 70 mm) reduzierte Materialstärke im Stoßbereich 36 bedingt im dargestellten Ausführungsbeispiel, dass die im Schalenabschnitt 20-1 befindliche Außenumfangsnut eine Tiefe von d0 - 70 mm = 10 mm (bzw. im oberen Scheitelbereich 20 mm) besitzt. Durch entsprechende Modifikation dieser "Nutentiefe" ist das beschriebene Verfahren unter Einsatz derselben Elektronenstrahlschweißeinrichtung ohne Weiteres auch zur Herstellung eines Gehäuseteils geeignet, welches dicker ist als das dargestellte Gehäuseteil 12-1. Auch die Materialstärke im Stoßbereich 36 (hier: 70 mm) kann im konkreten Anwendungsfall jedoch variiert werden. Diesbezüglich ist anzumerken, dass Elektronenstrahlverschweißungen mit einem "Durchschweißen" bis zu Materialstärken von etwa 150 mm möglich sind, abhängig vom eingesetzten Elektronenstrahlschweißgerät und der Wahl der Materialien für die zu verschweißenden Bauteile 32 und 34.

Im dargestellten Ausführungsbeispiel sind die Bauteile 32 und 34 jeweils als ein Stahlgußteil vorgesehen, beispielsweise aus identischem Material (bevorzugt Stahl, z. B. vom Typ "G17CrMoV5-10" oder ähnlich).

Dies ist jedoch nicht zwingend. Alternativ könnten auch verschiedene Materialien vorgesehen sein, etwa in Anpassung an die in der Verwendungssituation gestellten Anforderungen. Beispielsweise könnte das Bauteil 32 aus einem höherwertigen Stahl zur Erzielung einer hohen Warmfestigkeit für die Verwendung in so genannten Hochdruck- oder Mitteldruckstufen der Dampfturbine gefertigt sein, wohingegen das Bauteil 34 zur Verwendung in einer Niederdruckstufe aus einem Material mit guter "Kaltzähigkeit" gebildet wird.

Auch ist es abweichend vom dargestellten Ausführungsbeispiel möglich, die Materialstärke d0 nicht einheitlich (für beide zu verschweißenden Bauteile 32 und 34) vorzusehen, sondern verschiedene entsprechende Materialstärken für die Bauteile 32 und 34 vorzusehen. Aber im Fügebereich werden die unterschiedlichen Materialstärken auf ein definiertes Maß angepasst.

Außerdem könnte vorgesehen sein, dass die Materialstärken der miteinander zu verschweißenden Bauteile (hier: Bauteile 32 und 34) über deren axiale Länge variieren. In einem solchen Fall soll der hier verwendete Begriff "Materialstärke" diejenige Materialstärke des betreffenden Bauteils bezeichnen, welche in der unmittelbaren Umgebung der Verschweißungsstelle, also des Stoßbereiches vorliegt.

Wie aus Fig. 1 ersichtlich, befindet sich die Vertikalebene V bei dieser zweiteiligen Zusammensetzung des Gehäuseteils 12-1 in Axialrichtung betrachtet etwa in der axialen Mitte der Gesamtlänge des Gehäuseteils 12-1 bzw. des damit aufgebauten Turbinengehäuses 12. Jedes der Bauteile 32 und 34 besitzt eine axiale Länge von mehr als 0,5 m, im dargestellten Ausführungsbeispiel sogar eine axiale Länge von etwa 3 m, so dass das Turbinengehäuse 12 mit einer axialen Länge von etwa 6 m ausgebildet wird.

Im dargestellten Beispiel liegt der Durchmesser bzw. die Radialausdehnung des Turbinengehäuses 12 im Bereich von etwa 2 m bis etwa 2, 5 m.

Insbesondere für noch längere Dampfturbinengehäuse kann auch vorgesehen sein, das Gehäuseteil 12-1 aus mehr als den hier vorgesehenen zwei Bauteilen 32 und 34 herzustellen, also z. B. drei oder vier derartige Bauteile in der erläuterten und in Fig. 3 dargestellten Weise paarweise miteinander zu verschweißen.

Eine weitere Besonderheit der in Fig. 3 dargestellten Verschweißungsstelle besteht darin, dass der Stoßbereich 36 in Axialrichtung betrachtet im Bereich eines der Verschraubungslöcher 24, 26 und 28, hier im Bereich des Verschraubungsloches 26, am Flanschabschnitt 22-1 des Gehäuseteils 12-1 verläuft. Es hat sich herausgestellt, dass dieser Verlauf des Stoßbereiches 36 bzw. der Vertikalebene V erheblich verringerte maximale Spannungen bzw. Pressungen im Volumen des Gehäuseteils 12-1 beim späteren Turbinenbetrieb ergibt.

Die Verschraubungslöcher 24, 26 und 28 (und die weiteren, in Fig. 3 nicht dargestellten Verschraubungslöcher des Flanschabschnittes 22-1) besitzen im dargestellten Ausführungsbeispiel jeweils einen Durchmesser von etwa 110 mm.

Diese Verschraubungslöcher können jeweils vor oder nach der Elektronenstrahlverschweißung ausgebildet (z. B. gebohrt) werden.

Bevorzugt ist jedoch zumindest dasjenige Verschraubungsloch, in dessen Bereich der Stoßbereich 36 verläuft, hier also das Verschraubungsloch 26, erst nach dem Verschweißen der beiden Bauteile 32 und 34 ausgebildet oder durch eine Nachbearbeitung auf Fertigmaß gebracht (z. B. "aufgebohrt").

Dies besitzt den Vorteil, dass hierbei eine Wulst im Bereich der "Schweißwurzel" (beim Elektronenstrahlschweißen von innen nach außen) bzw. eine Wulst im Bereich der "Schweißnaht" (beim Elektronenstrahlschweißen von außen nach innen) beseitigt wird.

Bei dieser nachträglichen Ausbildung des Verschraubungsloches 26 bzw. dessen Nachbearbeitung kann besonders vorteilhaft auch eine Optimierung des späteren mechanischen Spannungsverlaufes an der Schweißnaht bzw. im Stoßbereich 36 erzielt werden, etwa indem an den betreffenden Stellen "große Radien" ausgebildet werden, um so genannte Kerbwirkungen zu reduzieren. Die Ausbildung von kerbfreien Oberflächen wirkt sich vorteilhaft insbesondere auf die Wechselfestigkeit (LCF) aus.

Falls das Verschraubungsloch 26 erst nach dem Verschweißen ausgebildet (gebohrt) wird, so ist jedoch bereits vor dem Verschweißen ein Schlitz zwischen den aneinandergefügten Flanschabschnitten der Bauteile auszubilden, welcher den späteren Entlastungsschlitz 40 (Fig. 3) bildet. Dieser Schlitz ist hierbei bevorzugt mit einer Schlitztiefe auszubilden, durch welche sich die gewünschte Materialstärke des Stoßbereiches 36 auch im Bereich der aneinandergefügten Flanschabschnitte ergibt (etwa 70 mm im dargestellten Beispiel). Dies ist bedeutsam für die Qualität der darauf folgenden Verschweißung auch im Bereich der aneinandergefügten Flanschabschnitte.

Die Verschraubungslöcher 24, 26 und 28 (und die weiteren Verschraubungslöcher) können jeweils mit oder ohne Innengewinde ausgebildet werden. Im dargestellten Ausführungsbeispiel sind sämtliche Verschraubungslöcher an den Flanschabschniten des (oberen) Gehäuseteils 12-1 als Durchgangslöcher, d. h. ohne Innengewinde vorgesehen. Die Verschraubung erfolgt durch von oben in die Verschraubungslöcher des Gehäuseteils 12-1 eingesetzte Schraubbolzen, welche z. B. in die korrespondierenden und mit Innengewinden versehenen Verschraubungslöcher des (unteren) Gehäuseteils 12-2 eingeschraubt werden. Falls aufgrund einer ebenfalls zweiteiligen Gestaltung des (unteren) Gehäuseteils 12-2 ebenfalls ein Verschraubungsloch im Bereich einer Schweißfuge (z. B. Vertikalebene V) angeordnet ist, so ist dieses Verschraubungsloch bevorzugt nicht mit einem Innengewinde versehen. An dieser Stelle kann zur Verschraubung eine Schraubenmutter unterhalb des Flanschabschnittes des (unteren) Gehäuseteils 12-2 vorgesehen werden.

Zusammenfassend wird mit der Erfindung eine modulare Herstellung eines Gehäuseteils, insbesondere einer "Gehäuseschalenhälfte" eines halbschalig ausgebildeten Turbinengehäuses ermöglicht. Hierzu ist ein besonderes Verfahren zur Herstellung eines elektronenstrahlgeschweißten Gehäuseteils vorgesehen, bei welchem vorteilhaft reduzierte Eigenspannung und eine optimierte Spannungsverteilung im geschweißten Flansch ("Stoßbereich") in der späteren Verwendung erzielt werden können. Gemäß einer bevorzugten Ausgestaltung wird vorgeschlagen, im Bereich der Teilfugenflansche bzw. des "Stoßes" von zunächst separat gefertigten Bauteilen wie folgt vorzugehen:
- Vorsehen einer Aussparung in den beiden zu fügenden und miteinander zu verschweißenden Bauteilen im Bereich der Teilfugenflansche, bevorzugt am Außenumfang dieser Teilfugenflansche. Damit kann bei der nachfolgenden Elektronenstrahlschweißung die Ausbildung einer gut definierten Wurzel im Stoßbereich und die Einhaltung einer möglichst gleichbleibenden Schweißnahtdicke gewährleistet werden. Am gefügten Gehäuseteil kann eine sich ergebende Aussparung im Wesentlichen nutförmig geformt sein. Dies mit relativ kleiner Nutenbreite, um die Auswirkungen auf die Auflagefläche der Teilfugenverschraubung zu begrenzen.
- Nach einer Positionierung und Fixierung der zu fügenden Bauteile wird die Schweißverbindung durch eine Elektronenstrahlverschweißung bewerkstelligt. Optional kann sodann eine Wärmebehandlung des geschweißten Gehäuseteils nachfolgen. Die Elektronenstrahlschweißung kann prinzipiell von innen oder von außen erfolgen. Falls von innen geschweißt wird, so bewirkt die Aussparung vorteilhaft, dass beim Schweißen die Überschussenergie des Elektronenstrahls ungehindert nach außen austreten kann und keine Schweißfehler entstehen. Beim Schweißen von außen ermöglicht eine am Außenumfang vorgesehene Aussparung die Zugänglichkeit zum relevanten Schweißbereich.

Schließlich wird das im Stoßbereich befindliche Verschraubungsloch auf Fertigmaß aufgebohrt, so dass ein offener, an der Schweißnaht angrenzender Nutbereich im Teilfugenflansch entfernt wird. Hierdurch wird eine Optimierung des Spannungsverlaufes an der Schweißnaht im Hinblick auf die bei der späteren Verwendung zu erwartenden Belastungen erzielt. Bei einer Schweißung von innen wird die Kerbwirkung im Bereich der Schweißwurzel wesentlich durch den Radius des Verschraubungsloches bzw. der betreffenden Bohrung und durch die Oberflächengüte der mechanisch bearbeiteten Fläche reduziert. Beim Schweißen von außen wird vorteilhaft eine Nahtüberhöhung entfernt und ebenfalls eine kerbfreie Oberfläche hergestellt.

## Patentansprüche

1. Verfahren zur Herstellung eines Gehäuseteils (12-1) für ein entlang einer Axialrichtung langgestrecktes Dampfturbinengehäuse (12), bei welchem mehrere solche Gehäuseteile (12-1, 12-2) in Umfangsrichtung des Dampfturbinengehäuses (12) betrachtet aneinandergefügt und miteinander verschraubt sind,
wobei das Gehäuseteil (12-1) einen in Axialrichtung und Umfangsrichtung sich erstreckenden Schalenabschnitt (20-1) und an den in Umfangsrichtung betrachteten Enden des Schalenabschnittes (20-1) jeweils einen nach außen abstehenden Flanschabschnitt (22-1) aufweist, der mit einer Reihe von in Axialrichtung voneinander beabstandeten Verschraubungslöchern (24, 26, 28) versehen ist,
**dadurch gekennzeichnet, dass** bei dem Verfahren zwei separat hergestellte Bauteile (32, 34) in Axialrichtung aneinandergefügt und entlang eines in Umfangsrichtung verlaufenden Stoßbereiches (36) durch Elektronenstrahlschweißen miteinander verschweißt werden, wobei an hierbei aneinanderzufügenden axialen Enden der beiden Bauteile (32, 34) jeweils eine die Materialstärke des Stoßbereiches (36) reduzierende Aussparung vorgesehen ist und der Stoßbereich (36) in Axialrichtung betrachtet im Bereich eines (26) der Verschraubungslöcher (24, 26, 28) verläuft.

2. Verfahren nach Anspruch 1, wobei die beiden Bauteile (32, 34) jeweils als Stahlgussteil vorgesehen sind.

3. Verfahren nach einem der vorangehenden Ansprüche, wobei das Gehäuseteil (12-1) mit einer axialen Länge von mehr als 1 m, insbesondere mehr als 2 m, hergestellt wird.

4. Verfahren nach einem der vorangehenden Ansprüche, wobei das Elektronenstrahlschweißen entlang des Stoßbereiches (36) mit einem von innen nach außen gerichteten Elektronenstrahl erfolgt.

5. Verfahren nach einem der vorangehenden Ansprüche, wobei zumindest dasjenige Verschraubungsloch (26), in dessen Bereich der Stoßbereich (36) verläuft, erst nach dem Verschweißen der beiden Bauteile (32, 34) ausgebildet oder durch eine Nachbearbeitung auf Fertigmaß gebracht wird.

6. Verfahren zur Herstellung eines Dampfturbinengehäuses (12) durch Aneinanderfügen und miteinander Verschrauben mehrerer Gehäuseteile (12-1, 12-2), **dadurch gekennzeichnet, dass** wenigstens eines der Gehäuseteile (12-1, 12-2) mittels eines Verfahrens nach einem der vorangehenden Ansprüche hergestellt wird oder hergestellt wurde.
